# EUROPEAN PATENT APPLICATION

(11) **EP 1 317 087 A1**
(43) Date of publication of application: **04.06.2003**
(21) Application number: 02751807.5
(22) Date of filing: 30.07.2002
(51) Int. Cl.: H04J 11/00, H04B 1/707

(54) **RADIO COMMUNICATION APPARATUS AND RADIO COMMUNICATION METHOD**

(30) Priority: 31.07.2001 JP 2001232825
(71) Applicant: MATSUSHITA ELECTRIC INDUSTRIAL CO., LTD., Kadoma-shi, Osaka 571-8501 (JP)
(72) Inventor: INOGAI, Kazunori, Yokohama-shi, Kanagawa 236-0032 (JP); UESUGI, Mitsuru, Yokosuka-shi, Kanagawa 238-0048 (JP); SUMASU, Atsushi, Yokosuka-shi, Kanagawa 238-0013 (JP)
(74) Representative: Grünecker, Kinkeldey, Stockmair & Schwanhäusser Anwaltssozietät
(86) International application number: JP0207747
(87) International publication number: WO03013039

(57) **Abstract**

Spreading factor determining section 104 increases spreading factor M of a spreading code to be generated in first spreading code generating section 102, as the ICI level increases. In other words, as deterioration increases in orthogonality among subcarriers in the frequency domain, the section 102 increases spreading factor M in the frequency domain. Further, as the ISI level increases, the section 102 increases spreading factor L of a spreading code to be generated in second spreading code generating section 103. In other words, as deterioration increases in orthogonality among subcarriers in the time domain, the section 102 increases spreading factor L in the time domain.

## Description

### Technical Field

The present invention relates to a radio communication apparatus and radio communication method used in a digital communication system, and more particularly, to a radio communication apparatus and radio communication method for performing radio communications based on the combination of a multicarrier modulation system such as an OFDM (Orthogonal Frequency Division Multiplexing) modulation system and a CDMA (Code Division Multiple Access) system.

### Background Art

In radio communications, particularly, in mobile communications, a variety of information has become subjects to transmit such as images and data besides speeches, which increases demands for faster and more reliable transmission. However, in the case of performing high-rate transmission in mobile communications, effects caused by delayed version in multipath are not ignore, and transmission performance deteriorates due to frequency selective fading.

One of measures against the frequency selective fading is a multicarrier modulation system such as an OFDM modulation system. In particular, the OFDM modulation system uses a plurality of subcarriers orthogonal with one another, and therefore, has the highest spectral efficiency among multicarrier modulation systems. Meanwhile, in mobile communications, the CDMA system has been put to practical use as a multiple access system. Recently, in the mobile communications field, attraction has been drawn to an OFDM-CDMA system obtained by combining the OFDM modulation system and CDMA system.

The OFDM-CDMA system includes a scheme of spreading symbols on the frequency axis (spreading in the frequency domain) and a scheme for spreading symbols on the time axis (spreading in the time domain). The frequency domain spreading scheme and time domain spreading scheme will be described below.

In spreading in the frequency domain, each of N symbols in series is spread with a spreading code with a spreading factor of M. M items of spread data on a chip basis undergo IFFT (Inverse Fast Fourier Transform) processing in parallel per symbol. As a result, there are generated N multicarrier signals of M subcarriers.

Thus, in spreading in the frequency domain, items of data on a chip basis generated from a symbol are configured at different subcarriers at the same time; in other words, the items of data are spread and configured on the frequency axis, and therefore, the frequency diversity effect is obtained, but the time diversity effect is not obtained.

Meanwhile, in spreading in the time domain, N symbols are converted from serial to parallel data, and each symbol is spread with a spreading code with a spreading factor of M. N items of spread data on a chip basis undergo IFFT processing for each chip sequentially. As a result, there are generated M multicarrier signals of N subcarriers.

Thus, in spreading in the time domain, items of data on a chip basis generated from a symbol are configured in time series at the same frequency; in other words, the items of data are spread and configured on the time axis, and therefore, the time diversity effect is obtained, but the frequency diversity effect is not obtained.

In mobile communications, propagation path conditions between a base station and mobile station vary with each moment, and sometimes deteriorate. Deterioration in propagation path conditions results in deterioration in orthogonality among subcarriers and in orthogonality among spreading codes in the OFDM/CDMA system, and leads to deterioration in transmission performance and decreases in system capacity.

### Disclosure of Invention

It is an object of the present invention to provide a radio communication apparatus and radio communication method capable of suppressing deterioration in transmission performance and decreases in system capacity caused by deterioration in propagation path conditions, in radio communications based on the combination of a multicarrier modulation system and CDMA system.

In order to achieve the above object, in the present invention, symbols are spread in both the frequency domain and time domain, and when items of data on a chip basis generated from a symbol are two-dimensionally spread and configured on both the frequency axis and time axis, either or both of spreading factors in the frequency domain and time domain are varied adaptably corresponding to propagation path conditions.

### Brief Description of Drawings

FIG.1 is a graph showing calculation values of ICI and ISI when delay is varied on static two-wave propagation path (DU rate: 5 [dB]);
FIG.2 is a graph showing a calculation result (transfer function) of frequency selective fading observed on each subcarrier in Vehicular B that is a representative model of mobile communications;
FIG.3 is a block diagram illustrating a configuration of a radio communication apparatus on transmitting side according to a first embodiment of the present invention;
FIG.4 is a block diagram illustrating a configuration of a radio communication apparatus on receiving side according to the first embodiment of the present invention;
FIG.5 is a view showing an example of spectra of a multicarrier signal;
FIG.6 is a block diagram illustrating a configuration of a propagation path conditions measuring section provided in the radio communication apparatus on receiving side according to the first embodiment of the present invention;
FIG.7 is a block diagram illustrating a configuration of a propagation path conditions measuring section provided in a radio communication apparatus on receiving side according to a second embodiment of the present invention;
FIG.8 is a block diagram illustrating a fading distortion canceling section provided in the radio communication apparatus on receiving side according to the second embodiment of the present invention;
FIG.9 is a block diagram illustrating a configuration of a propagation path conditions measuring section provided in a radio communication apparatus on receiving side according to a third embodiment of the present invention;
FIG.10 is a block diagram illustrating a configuration of a propagation path conditions measuring section provided in a radio communication apparatus on receiving side according to a fourth embodiment of the present invention;
FIG.11 is a block diagram illustrating a configuration of a propagation path conditions measuring section provided in a radio communication apparatus on receiving side according to a fifth embodiment of the present invention;
FIG.12 is a block diagram illustrating a configuration of a propagation path conditions measuring section provided in a radio communication apparatus on receiving side according to a sixth embodiment of the present invention;
FIG.13 is a block diagram illustrating a configuration of a propagation path conditions measuring section provided in a radio communication apparatus on receiving side according to a seventh embodiment of the present invention;
FIG.14 is a graph showing impulse response of propagation paths;
FIG.15 is a block diagram illustrating a configuration of a propagation path conditions measuring section provided in a radio communication apparatus on receiving side according to an eighth embodiment of the present invention; and
FIG.16 is a block diagram illustrating a configuration of a propagation path conditions measuring section provided in a radio communication apparatus on receiving side according to a ninth embodiment of the present invention.

### Best Mode for Carrying Out the Invention

For the purpose of obtaining both effects of frequency diversity and time diversity in radio communications based on the combination of a multicarrier modulation system and CDMA system, the inventor of the present invention filed applications of the invention where symbols are spread in both the frequency domain and time domain, and thereby items of data on a chip basis generated from a symbol are two-dimensionally spread and configured on both the frequency axis and time axis. The invention is disclosed in Japanese Patent Applications 2000-076904, 2000-308884 and 2001-076828, entire contents of which are expressly incorporated by reference herein.

In radio communications based on the combination of a multicarrier modulation system and CDMA system, deterioration in transmission performance results from deterioration in orthogonality among subcarriers and deterioration in orthogonality among spreading codes.

The deterioration in orthogonality among subcarriers is such a phenomenon that, for example, when a path with a great delay exceeding in length a guard interval is present on propagation paths, subcarriers deform in their waveform greatly being affected by changes in adjacent symbols, and thereby interfere with each other, which reduces the capability of identifying subcarriers. The deterioration in orthogonality among subcarriers remarkably degrades the transmission performance.

The deterioration in orthogonality among subcarriers includes deterioration in the frequency domain and deterioration in the time domain, which are respectively caused by interference between subcarriers with different frequencies on the frequency axis and by interference between subcarriers with the same frequency on the time axis. In this specification, the former is called Inter Carrier Interference (ICI) and the latter is called Inter Symbol Interference (ISI).

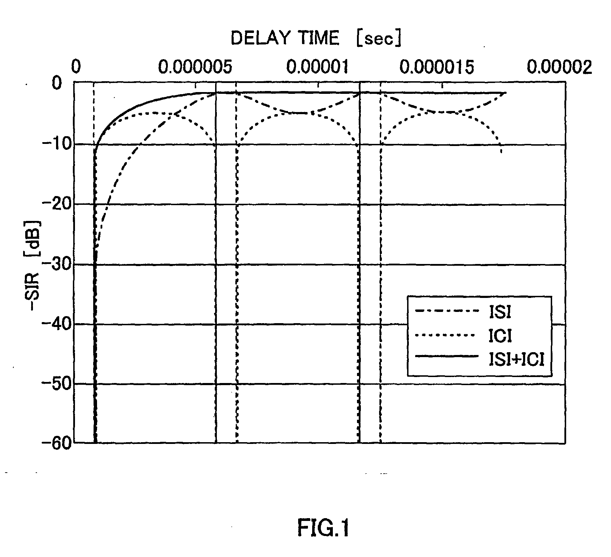

FIG.1 shows calculation values of ICI and ISI when delay is varied in static two-wave propagation path (DU rate: 5 [dB]). As show in FIG.1, when a delay difference between two signals is the duration of a symbol, symbols with different information are completely multiplexed, and therefore, ISI has a maximum value. Meanwhile, in subcarriers with different frequencies which are never multiplexed, such a condition is equivalent to delay difference of 0 where times of changes in symbols overlap one another, and ICI has a minimum value. The sum of ICI and ISI is constant, and is coincident with an interfering level indicated in DU ratio (in BPSK modulation, when the DU ratio is 5 [dB], the sum of ICI and ISI is -5 [dB]. In QPSK where a signal distance is 1/√2 times that in BPSK modulation, when the DU ratio is 5 [dB], the sum of ICI and ISI is -2 [dB]).

The deterioration in orthogonality among spreading codes is such a phenomenon that when an amplitude distortion and phase distortion are present in a symbol in a spreading code length, spreading codes interfere with each other and thereby the capability of identifying spreading codes deteriorates. The deterioration in orthogonality among spreading codes remarkably degrades the transmission performance. When symbols are spread both in the frequency domain and time domain as described in the invention previously applied by the inventor, it is necessary to consider the deterioration in orthogonality among spreading codes in the frequency domain and the deterioration in orthogonality among spreading codes in the time domain.

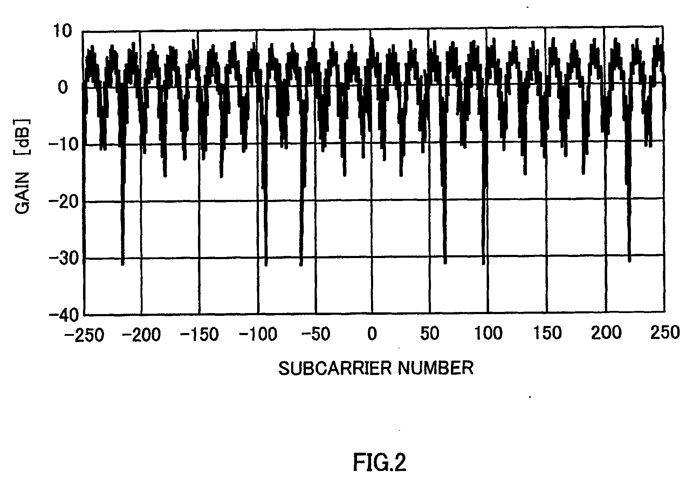

FIG.2 shows a calculation result (transfer function) of frequency selective fading observed on each subcarrier in Vehicular B that is a representative model of mobile communications. As shown in the figure, since very large amplitude distortion is observed on each subcarrier, it is understood that despreading in the frequency domain without any processing does not maintain orthogonality among spreading codes in the frequency domain. Therefore, a pilot symbol is inserted into a multicarrier signal in both frequency and time domains, and a receiving side obtains a channel estimation value using the pilot symbol, and using the channel estimation value, compensates each subcarrier for amplitude distortion and phase distortion. However, there remain variation components that cannot be compensated, and the remaining variation components degrade the orthogonality among spreading codes. The deterioration in orthogonality among spreading codes in the time domain similarly occurs.

Embodiments of the present invention will be described below with reference to accompanying drawings.

### (First embodiment)

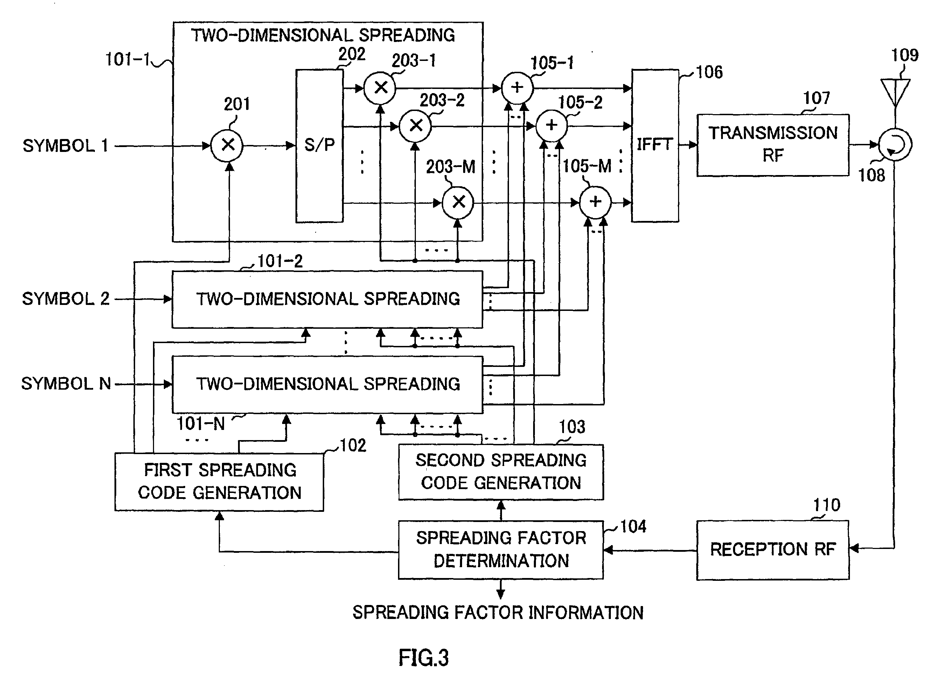

FIG.3 is a block diagram illustrating a configuration of a radio communication apparatus on transmitting side according to the first embodiment of the present invention. The radio communication apparatus on receiving side illustrated in FIG.3 is comprised of two-dimensional spreading sections 101-1 to 101-N, first spreading code generating section 102, second spreading code generating section 103, spreading factor determining section 104, multiplexing sections 105-1 to 105-M, IFFT (Inverse Fast Fourier Transform) section 106, transmission RF section 107, duplexer 108, antenna 109 and reception RF section 110. Two-dimensional spreading sections 101-1 to 101-N have the same configuration, and are each comprised of frequency-domain spreader 201, S/P (Serial/Parallel conversion) section 202, and time-domain spreaders 203-1 to 203-M.

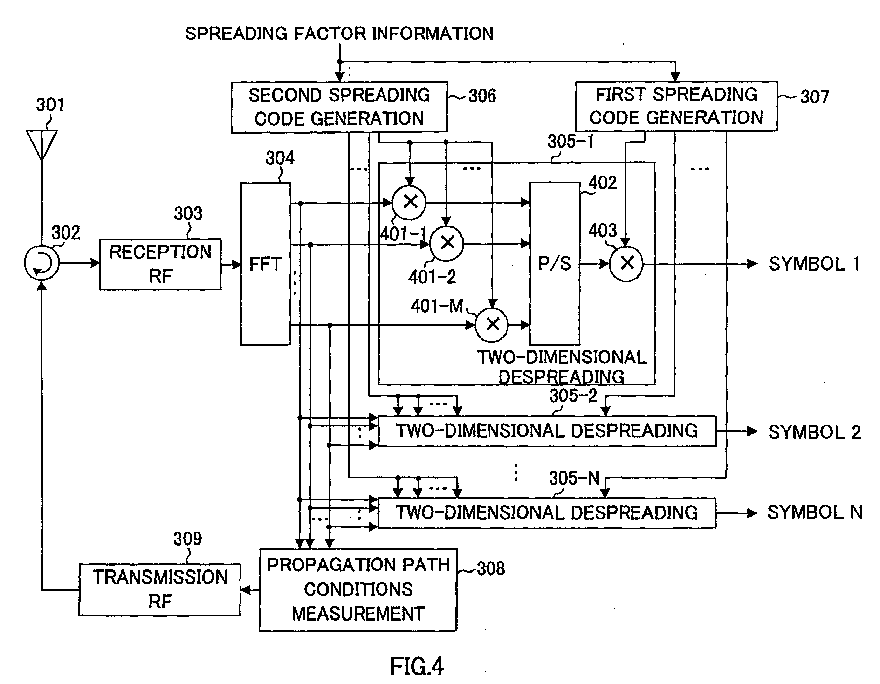

FIG.4 is a block diagram illustrating a configuration of a radio communication apparatus on receiving side according to the first embodiment of the present invention. The radio communication apparatus on receiving side illustrated in FIG.4 is comprised of antenna 301, duplexer 302, reception RF section 303, FFT (Fast Fourier Transform) section 304, two-dimensional despreading sections 305-1 to 305-N, second spreading code generating section 306, first spreading code generating section 307, propagation path conditions measuring section 308 and transmission RF section 309. Two-dimensional despreading sections 305-1 to 305-N have the same configuration, and each have time-domain despreaders 401-1 to 401-M, P/S (Parallel/Serial conversion) section 402, and frequency-domain despreader 403.

In the radio communication apparatus illustrated in FIG.3, each of symbols 1 to N is spread with a spreading code with a spreading factor of M in frequency-domain spreader 201. The spreading code is generated in first spreading code generating section 102, and spreading factor M is determined in spreading factor determining section 104 corresponding to propagation path conditions measured in the radio communication apparatus on receiving side. In other words, the spreading factor of M of the spreading code generated in first spreading code generating section 102 is variable corresponding to propagation path conditions.

Spreading codes that first spreading code generating section 102 generates respectively for two-dimensional spreading sections 101-1 to 101-N have the same spreading factor of M and are orthogonal to one another. M chips of spread data on a chip basis are input to S/P section 202. S/P section 202 converts M chips of data input in series on a chip basis into parallel data. By processing the data in frequency-domain spreader 201 and S/P section 202, symbols 1 to N each are spread in the frequency domain (on the frequency axis) to M chips, and as a result, data of M chips on a chip basis is assigned to subcarriers with different frequencies.

Data of M chips on a chip basis converted into parallel data in S/P section 202 are spread with a spreading code with a spreading factor of L in time-domain spreaders 203-1 to 203-M, respectively. In other words, the symbol spread into M chips in the frequency domain (on the frequency axis) is further spread into L chips in the time domain (on the time axis). The spreading code is generated in second spreading code generating section 103, and the spreading factor of L is determined in spreading factor determining section 104 corresponding to propagation path conditions measured in the radio communication apparatus on receiving side. In other words, the spreading factor of L of the spreading code generated in second spreading code generating section 103 is variable corresponding to propagation path conditions. Spreading codes that second spreading code generating section 103 generates respectively for two-dimensional spreading sections 101-1 to 101-N have the same spreading factor of L and are orthogonal to one another.

M items of data on a chip basis spread in time-domain spreaders 203-1 to 203-M are input to respective multiplexing sections 105-1 to 105-M. Multiplexing sections 105-1 to 105-M perform code-division-multiplexing on data on a chip basis of symbols 1 to N spread in two-dimensional spreading sections 101-1 to 101-N to input to IFFT section 106, respectively. IFFT section 106 assigns data on a chip basis subjected to code-division-multiplexing to respective subcarriers to perform IFFT processing, and thus generates multicarrier signals (OFDM symbols). In this way, L multicarrier signals in the time domain are generated. In addition, a plurality of subcarriers of the multicarrier signal (OFDM symbol) is mutually orthogonal. The multicarrier signals generated in IFFT section 106 undergo predetermined radio processing (such as D/A conversion and upconverting) in transmission RF section 107, and then transmitted to a radio communication apparatus on receiving side through duplexer 108 and antenna 109. In addition, duplexer 109 switches between transmission and reception.

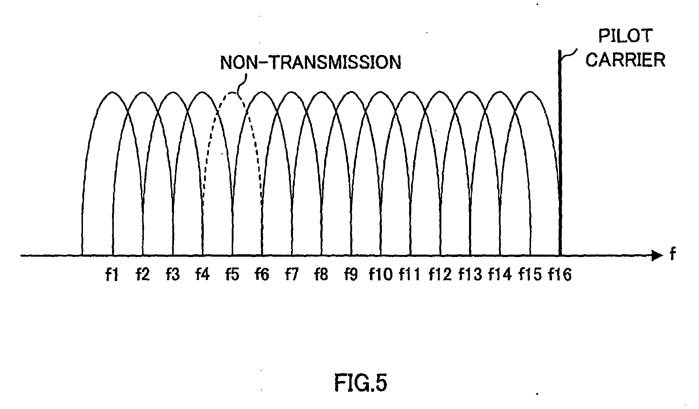

The multicarrier signal will be described below which is transmitted from the radio communication apparatus on transmitting side illustrated in FIG.3. FIG.5 shows an example of spectra of the multicarrier signal. As shown in the figure, the multicarrier signal in this embodiment includes a subcarrier that does not transmit data (hereinafter, referred to as a "non-transmission subcarrier") and a pilot carrier. As the non-transmission subcarrier, there are a subcarrier (hereinafter referred to as "transmission off subcarrier") of specific frequency to which data on a chip basis is never assigned in the time domain, and a subcarrier (hereinafter, referred to as a "transmission off subcarrier") to which data on a chip basis is not assigned at certain time. A subcarrier (hereinafter, referred to as an "adjacent subcarrier"; subcarrier f15 in FIG.5) adjacent to the pilot carrier is assigned a pilot symbol. The spectra of the multicarrier signal are the same as in subsequent embodiments.

The multicarrier signal transmitted from the radio communication apparatus on transmitting side is received in the radio communication apparatus on receiving side illustrated in FIG.4 through antenna 301 and duplexer 302, undergoes predetermined radio processing (such as downconverting and A/D conversion) in reception RF section 303, and input to FFT section 304. FFT section 304 performs FFT processing on the multicarrier signal, and thereby fetches data transmitted in each subcarrier. The same processing is performed on L multicarrier signals sequentially received, and the fetched data is input to time-domain despreaders 401-1 to 401-M. Further, the fetched data is input to propagation path conditions measuring section 308.

Time-domain despreaders 401-1 to 401-M perform despreading on input data with the same spreading codes (with a spreading code of L) as used in time-domain spreaders 203-1 to 203-M in the radio communication apparatus on transmitting side, respectively. In other words, the despreading in the time domain is performed. The spreading codes are generated in second spreading code generating section 306, and the spreading factor of L is determined in spreading factor determining section 104 in the radio communication apparatus on transmitting side, and is notified to the radio communication apparatus on receiving side as spreading factor information.

In addition, the spreading factor information may be notified using a predetermined channel, or may be included in a multicarrier signal to notify, and is not limited particularly in notification method. M chips of despread data on a chip basis are converted into serial data in P/S section 402 and input to frequency-domain despreader 403.

Frequency-domain despreader 403 performs despreading on input data with the same spreading codes (with a spreading factor of M) as used in frequency-domain spreaders 201 in the radio communication apparatus on transmitting side. In other words, the despreading in the frequency domain is performed. The spreading codes are generated in first spreading code generating section 307, and the spreading factor of M is determined in spreading factor determining section 104 in the radio communication apparatus on transmitting side, and is notified to the radio communication apparatus on receiving side as spreading factor information, in the same way as in the spreading factor of L.

Two-dimensional dispreading sections 305-1 to 305-N thus perform -dispreading in the time domain and in the frequency domain to obtain symbols 1 to N.

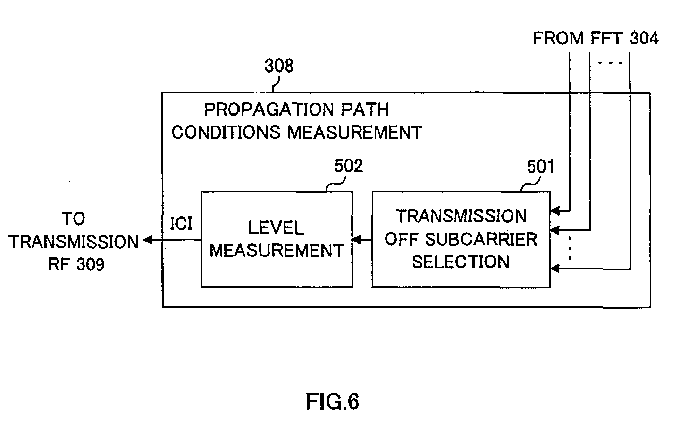

Propagation path conditions measuring section 308 measures propagation path conditions of multicarrier signals transmitted from the radio communication apparatus on transmitting side as described below. FIG.6 is a block diagram illustrating a configuration of propagation path conditions measuring section 308 according to this embodiment. In this embodiment ICI levels are measured as propagation path conditions as described below.

The transmission off subcarrier is always assigned no data on a chip basis in the time domain, thus has a received level of 0 originally, and does not have ISI. Accordingly, the received level of the transmission off subcarrier is only due to ICI that is interference with another subcarrier. Therefore, in propagation path conditions measuring section 308 illustrated in FIG.6, transmission off subcarrier selecting section 501 selects a transmission off subcarrier, and level measuring section 502 measures a received level of the transmission off subcarrier, and thereby measures the ICI level. The measured ICI level is subjected to the predetermine radio processing (such as D/A conversion and upconverting) in transmission RF section 309 illustrated in FIG.4, and notified to the radio communication apparatus on transmitting side through duplexer 302 and antenna 301.

In the radio communication apparatus on transmitting side illustrated in FIG.3, the ICI level received through antenna 109 and duplexer 108 is subjected to the predetermined radio processing (such as downconverting and A/D conversion) in reception RF section 110, and is input to spreading factor determining section 104.

As the deterioration increases in orthogonality among subcarriers in the frequency domain, the ICI level increases and the transmission performance deteriorates. It is known that doubling the spreading factor in the frequency domain improves SIR (Signal to Interference Ratio) by about 3 [dB]. Therefore, as the ICI level increases, spreading factor determining section 104 sets spreading factor M of a spreading code to be generated in first spreading code generating section 102 to higher. In other words, spreading factor determining section 104 sets spreading factor M in the frequency domain to higher, as the deterioration increases in orthogonality among subcarriers in the frequency domain, and thus suppresses the deterioration in orthogonality among subcarriers in the frequency domain. By thus increasing the spreading factor in the frequency domain, it is possible to suppress the deterioration in the transmission performance caused by ICI. Spreading factor M in the frequency domain determined in spreading factor determining section 104 is output to first spreading code generating section 102, while being notified to the radio communication apparatus on receiving side as the spreading factor information.

In addition, since the upper limit of spreading factor M in the frequency domain is the number of subcarriers used in transmission, a case is considered where the spreading factor in the frequency domain is not increased to a desired value. However, in this case, by decreasing a transmission rate and increasing the spreading factor in the time domain by an amount corresponding to a shortage of the spreading factor in the frequency domain, it is possible to suppress the deterioration in the transmission performance.

Thus, according to the radio communication apparatus according to this embodiment, since spreading in the frequency domain is performed using spreading factor M variable corresponding to propagation path conditions varying with each moment, it is possible to perform spreading in the frequency domain using an appropriate spreading factor corresponding to propagation path conditions. Further, since the spreading factor is determined on multicarrier-signal transmitting side, the receiving side does not need to determine the spreading factor, thereby simplifying a configuration of an apparatus on receiving side. Furthermore, when propagation path conditions deteriorate and the ICI level increases, the spreading factor is increased in the frequency domain and it is thus possible to suppress deterioration in orthogonality among subcarriers in the frequency domain. Moreover, according to this embodiment, it is possible to measure the ICI level used in setting a spreading factor in the frequency domain, with accuracy and with a relatively simplified method.

### (Second embodiment)

A radio communication apparatus according to this embodiment differs from that in the first embodiment in setting a spreading factor in the time domain to higher as the ISI level increases.

As illustrated in FIG.5, the multicarrier signal transmitted from a radio communication apparatus on transmitting side contains a pilot carrier with amplitude of constant envelop. Since the pilot carrier indicates the constant envelop even when an arbitrary delay path component is present, the variation in amplitude of constant envelop of the pilot carrier received in the radio communication apparatus on receiving side represents the time variation due to fading. Meanwhile, adjacent subcarriers also receive fading variation almost the same as that on the pilot carrier. Therefore, in this embodiment the ISI level is measured as propagation path conditions as described below.

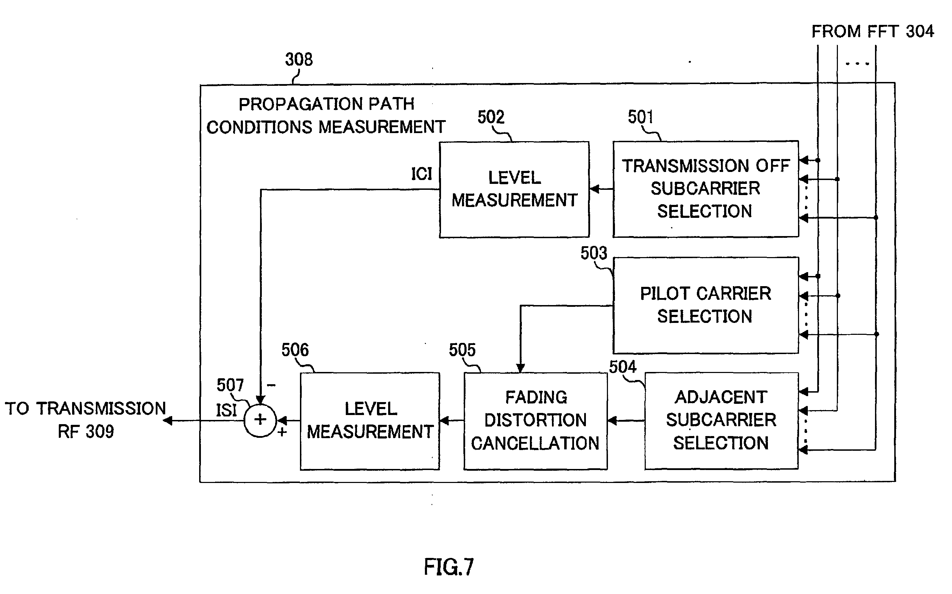

FIG.7 is a block diagram illustrating a configuration of propagation path conditions measuring section 308 provide in the radio communication apparatus on receiving side according to the second embodiment of the present invention. In addition, in FIG.7 the same structural components as illustrated in FIG.6 are assigned the same reference numerals to omit specific descriptions.

In propagation path conditions measuring section 308 illustrated in FIG.7, pilot carrier selecting section 503 selects a pilot carrier to input to fading distortion canceling section 505. Adjacent subcarrier selecting section 504 selects an adjacent subcarrier to input to fading distortion canceling section 505.

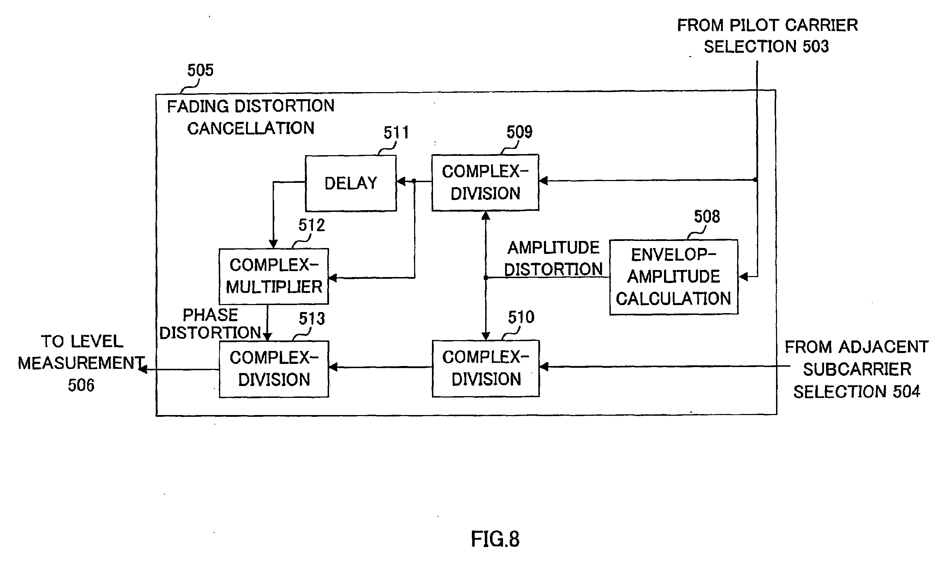

FIG.8 illustrates a configuration of fading distortion canceling section 505. In FIG.8, envelop-amplitude calculating section 508 calculates an amplitude distortion, due to fading, of amplitude of constant envelop of the pilot carrier to input to complex dividers 509 and 510. Complex divider 509 complex-divides the amplitude of the pilot carrier by the amplitude distortion calculated in envelop-amplitude calculating section 508, and thus, the pilot carrier is compensated for the amplitude distortion to be a constant envelop signal. Complex divider 510 complex-divides the amplitude of the adjacent subcarrier by the amplitude distortion calculated in envelop-amplitude calculating section 508, and thus, the adjacent subcarrier is compensated for amplitude distortion to be a constant envelop signal.

Next, delayer 511 (delay time T) and complex multiplier 512 perform differentially coherent detection on the pilot carrier of constant envelop, thereby detects a phase variation within delay time T used in the detection, and inputs the phase variation to complex divider 513 as a phase distortion due to fading. Complex divider 513 complex-divides a phase of the adjacent subcarrier by a phase distortion input from complex multiplier 512, and thus the phase distortion of the adjacent subcarrier is compensated. In this way, the adjacent subcarrier is compensated for amplitude distortion and phase distortion (both are called collectively fading distortion) due to fading, and then input to level measuring section 506.

In addition, as delay time T is made longer, a range of detectable phase distortion is made narrower, while as delay time T is made shorter, power consumption, for example, in complex multiplication increases, whereby it is necessary to determine an appropriate value in consideration of the foregoing.

As described above, a pilot symbol is inserted into the adjacent subcarrier. Level measuring section 506 illustrated in FIG.7 measures a level variation in the pilot symbol to input to subtractor 507. The level variation in the pilot symbol is a sum of ICI and ISI caused by deterioration in orthogonality among subcarriers. Then, subtractor 507 subtracts the ICI level measured in level measuring section 502 from the level variation measured in level measuring section 506, and thus measures the ISI level. The measured ISI level is subjected to the predetermined radio processing in transmission RF section 309 illustrated FIG.4, and is notified to the radio communication apparatus on transmitting side through duplexer 302 and antenna 301.

In the radio communication apparatus on transmitting side illustrated in FIG.3, the ISI level received through antenna 109 and duplexer 108 is subjected to the predetermined radio processing in reception RF section 110, and input to spreading factor determining section 104.

As the deterioration increases in orthogonality among subcarriers in the time domain, the ISI level increases and the transmission performance deteriorates. Therefore, as the ISI level increases, spreading factor determining section 104 sets spreading factor L of a spreading code to be generated in second spreading code generating section 103 to higher. In other words, spreading factor determining section 104 sets spreading factor L in the time domain to higher, as the deterioration increases in orthogonality among subcarriers in the time domain, and thus suppresses the deterioration in orthogonality among subcarriers in the time domain. By thus increasing the spreading factor in the time domain, it is possible to suppress deterioration in the transmission performance caused by ISI. Spreading factor L in the time domain determined in spreading factor determining section 104 is output to second spreading code generating section 103, while being notified to the radio communication apparatus on receiving side as the spreading factor information.

In addition, when a multicarrier signal includes a plurality of pilot carriers, ISI levels are measured on pilot symbols inserted into respective adjacent subcarriers to average, and thus the accuracy in ISI level measurement is further improved.

Further, while in the above-mentioned explanation a pilot symbol is used to measure an ISI level, it may be possible to measure the ISI level using an arbitrary symbol as long as the modulation scheme does not use amplitude information and provides constant amplitude (for example, QPSK modulation).

It is necessary to decrease the transmission rate to increase the spreading factor in the time domain, but since a lower limit in the transmission rate is generally set in the system, a case is considered where the spreading factor in the time domain is not increased to a desired value. In this case, by increasing the number of subcarriers to use and increasing the spreading factor in the frequency domain by an amount corresponding to a shortage of the spreading factor in the time domain, it is possible to suppress the deterioration in the transmission performance.

Thus, according to the radio communication apparatus according to this embodiment, since spreading in the time domain is performed using spreading factor L variable corresponding to propagation path conditions varying with each moment, it is possible to perform spreading in the time domain using an appropriate spreading factor corresponding to propagation path conditions. Further, when propagation path conditions deteriorate and the ICI level increases, the spreading factor is increased in the time domain and it is thus possible to suppress deterioration in orthogonality among subcarriers in the time domain. Furthermore, according to this embodiment, it is possible to measure the ISI level used in setting a spreading factor in the time domain, with accuracy and with a relatively simplified method.

### (Third embodiment)

A radio communication apparatus according to this embodiment is the same as that in the second embodiment in increasing the spreading factor in the time domain as the ISI level increases, and differs from that in the second embodiment in measuring the ISI level using a transmission off symbol.

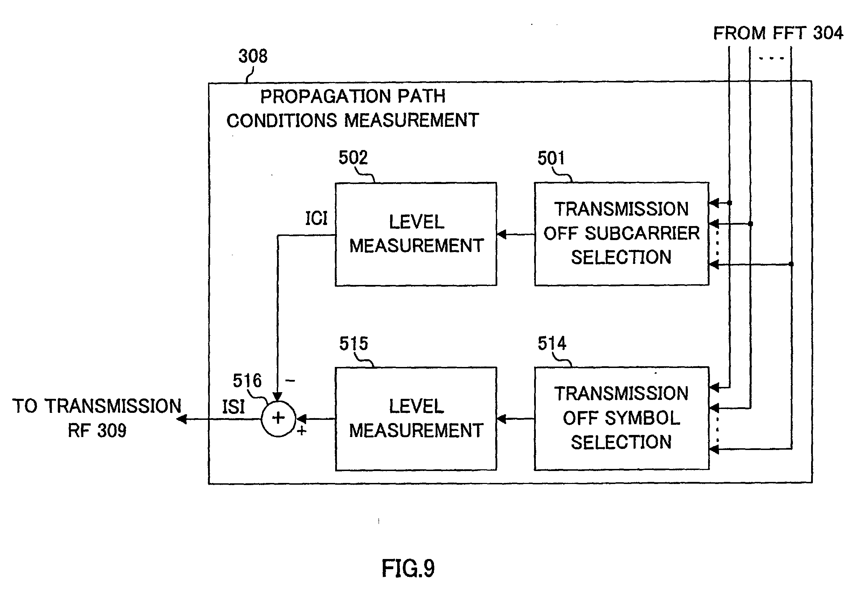

FIG.9 is a block diagram illustrating a configuration of propagation path conditions measuring section 308 provided in the radio communication apparatus on receiving side according to the third embodiment of the present invention. In addition, in FIG.9 the same structural components as illustrated in FIG.6 are assigned the same reference numerals to omit specific descriptions.

In FIG.9, transmission off symbol selecting section 514 selects a transmission off symbol to input to level measuring section 515. Level measuring section 515 measures a received level of the transmission off symbol to input to subtractor 516. The received level of the transmission off symbol is a sum of ICI and ISI caused by deterioration in orthogonality among subcarriers. Then, subtractor 516 subtracts the ICI level measured in level measuring section 502 from the received level measured in level measuring section 515, and thus measures the ISI level. The measured ISI level is subjected to the predetermined radio processing in transmission RF section 309 illustrated FIG.4, and is notified to the radio communication apparatus on transmitting side through duplexer 302 and antenna 301. The operation of the radio communication apparatus on transmitting side is the same as in the second embodiment, and the descriptions are omitted.

In addition, when a multicarrier signal includes a plurality of transmission off symbols, ISI levels are measured on respective transmission off symbols to average, and thus the accuracy in ISI level measurement is further improved.

In this way, the radio communication apparatus according to this embodiment has the same effects as in the second embodiment.

### (Fourth embodiment)

A radio communication apparatus according to either one of the fourth to sixth embodiments increases the spreading factor in the time domain as deterioration increases in orthogonality among spreading codes. More specifically, the apparatus increases the spreading factor as a maximum Doppler frequency increases. This embodiment explains a case where the maximum Doppler frequency is measured from a rate of level variation in pilot carrier.

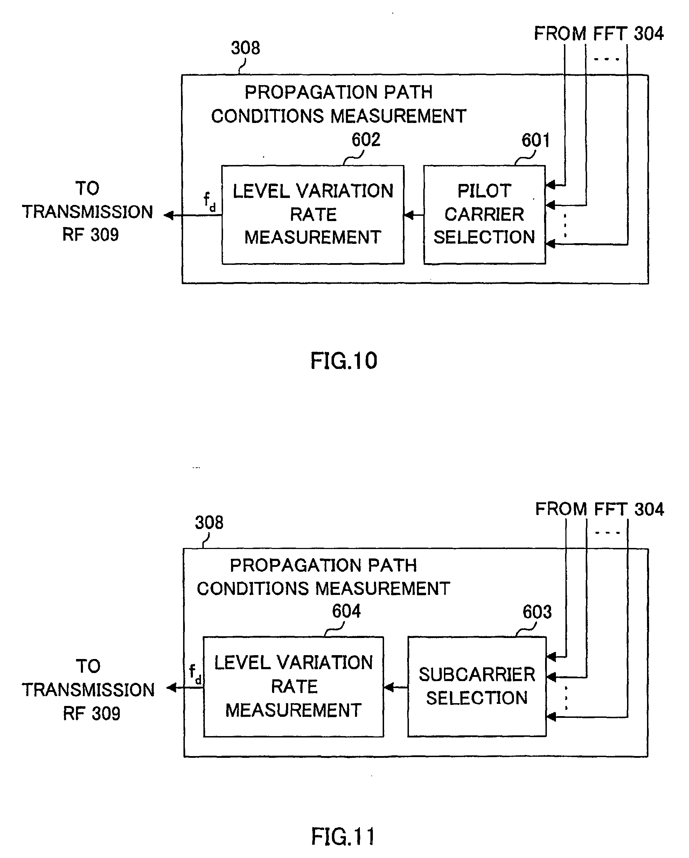

FIG.10 is a block diagram illustrating a configuration of propagation path conditions measuring section 308 provided in the radio communication apparatus on receiving side according to the fourth embodiment of the present invention. In FIG.10, pilot carrier selecting section 601 selects a pilot carrier to input to level variation rate measuring section 602.

Since a pilot carrier indicates the constant envelop even when an arbitrary delay path component is present, the variation in amplitude of constant envelop of the pilot carrier received in the radio communication apparatus on receiving side represents the time variation due to fading. Then, level variation rate measuring section 602 measures the number of times (i.e., the rate of level variation in pilot carrier) the amplitude of the constant envelop of the pilot carrier crosses a predetermined level per unit time, and thus measures maximum Doppler frequency f_{d} in fading. Measured maximum Doppler frequency f_{d} is subjected to the predetermined radio processing in transmission RF section 309 illustrated FIG.4, and is notified to the radio communication apparatus on transmitting side through duplexer 302 and antenna 301.

In the radio communication apparatus on transmitting side illustrated in FIG.3, maximum Doppler frequency f_{d} received through antenna 109 and duplexer 108 is subjected to the predetermined radio processing in reception RF section 110, and input to spreading factor determining section 104.

When a spreading code length in the time domain is greatly longer than fd⁻¹, the level variation in the spreading code length is not ignored, and the orthogonality among spreading codes in the time domain deteriorates. Therefore, as maximum Doppler frequency f_{d} increases, spreading factor determining section 104 sets spreading factor L of a spreading code to be generated in second spreading code generating section 103 to higher. In other words, spreading factor determining section 104 sets spreading factor L in the time domain to higher, as the deterioration increases in orthogonality among spreading codes in the time domain, and thus suppresses the deterioration in orthogonality among spreading codes in the time domain. By thus increasing the spreading factor in the time domain, it is possible to suppress deterioration in the transmission performance. Spreading factor L in the time domain determined in spreading factor determining section 104 is output to second spreading code generating section 103, while being notified to the radio communication apparatus on receiving side as the spreading factor information.

In addition, when a multicarrier signal includes a plurality of pilot carriers, maximum Doppler frequency f_{d} is measured on each of the pilot carriers to average, thus further improving the accuracy in measuring maximum Doppler frequency f_{d.}

In this way, according to the radio communication apparatus according to this embodiment, when propagation path conditions deteriorate and the maximum Doppler frequency increases, the spreading factor is increased in the time domain and it is thus possible to suppress deterioration in orthogonality among spreading codes in the time domain. Further, according to this embodiment, it is possible to measure the maximum Doppler frequency used in setting a spreading factor, with accuracy and with a relatively simplified method.

### (Fifth embodiment)

A radio communication apparatus according to this embodiment is the same as that in the fourth embodiment in increasing the spreading factor in the time domain as the maximum Doppler frequency increases, and differs from that in the fourth embodiment, in obtaining the maximum Doppler frequency from a rate of level variation in subcarriers with the same frequency when symbols are modulated in a modulation scheme that does not use amplitude information.

FIG.11 is a block diagram illustrating a configuration of propagation path conditions measuring section 308 provided in the radio communication apparatus on receiving side according to the fifth embodiment of the present invention. In FIG.11, subcarrier selecting section 603 selects a subcarrier of specific frequency except a pilot carrier and non-transmission subcarrier to input to level variation rate measuring section 604.

When symbols are modulated in a modulation scheme (for example, QPSK modulation) that does not use amplitude information and provides constant amplitude, the variation in symbol amplitude among subcarriers with the same frequency represents the time variation due to fading. Then, level variation rate measuring section 604 measures the number of times (i.e., the rate of level variation in subcarriers with the same frequency) the symbol amplitude of the subcarrier with the specific frequency crosses a predetermined level per unit time, and thus measures maximum Doppler frequency fd in fading. Measured maximum Doppler frequency f_{d} is subjected to the predetermined radio processing in transmission RF section 309 illustrated FIG.4, and is notified to the radio communication apparatus on transmitting side through duplexer 302 and antenna 301. The operation of the radio communication apparatus on transmitting side is the same as in the fourth embodiment, and the descriptions are omitted.

In this way, the radio communication apparatus according to this embodiment has the same effects as in the fourth embodiment.

### (Sixth embodiment)

A radio communication apparatus according to this embodiment is the same as that in the fourth embodiment in increasing the spreading factor in the time domain as the maximum Doppler frequency increases, and differs from that in the fourth embodiment, in obtaining the maximum Doppler frequency from a phase rotation rate of pilot symbol among subcarriers (herein, adjacent subcarriers) with the same frequency.

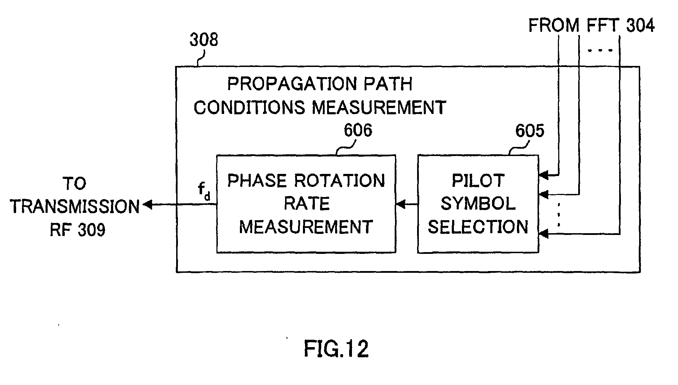

FIG.12 is a block diagram illustrating a configuration of propagation path conditions measuring section 308 provided in the radio communication apparatus on receiving side according to the sixth embodiment of the present invention. In FIG. 12, pilot symbol selecting section 605 selects a subcarrier (herein, adjacent subcarrier) into which a pilot symbol is inserted to input to phase rotation rate measuring section 606.

It is possible to readily detect amplitude distortion and phase distortion added to a pilot symbol on a propagation path. Then, phase rotation rate measuring section 606 measures the time variation in phase distortion of the pilot symbol (i.e., phase rotation rate of the pilot symbol among subcarriers with the same frequency), and thus measures maximum Doppler frequency f_{d}. Measured maximum Doppler frequency f_{d} is subjected to the predetermined radio processing in transmission RF section 309 illustrated FIG.4, and is notified to the radio communication apparatus on transmitting side through duplexer 302 and antenna 301. The operation of the radio communication apparatus on transmitting side is the same as in the fourth embodiment, and the descriptions are omitted.

In this way, the radio communication apparatus according to this embodiment has the same effects as in the fourth embodiment.

### (Seventh embodiment)

A radio communication apparatus according to either one of seventh to ninth embodiments increases the spreading factor in the frequency domain as deterioration increases in orthogonality among spreading codes. Specifically, in the seventh and eighth embodiments, the spreading factor in the frequency domain is made higher as the maximum delay time is longer on propagation paths. First, this embodiment explains a case of measuring the maximum delay time on propagation paths from impulse response of the propagation paths obtained by performing inverse Fourier transform on a channel estimation value.

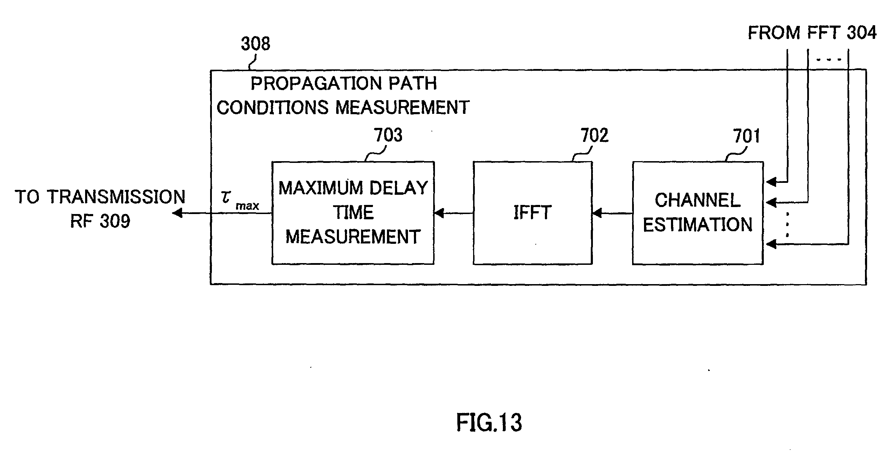

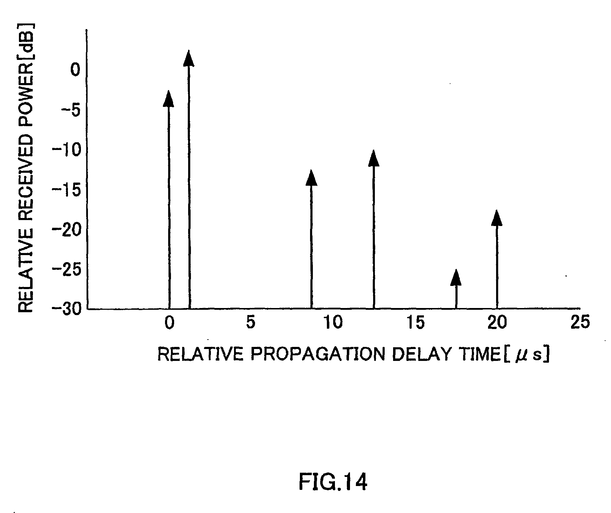

FIG.13 is a block diagram illustrating a configuration of propagation path conditions measuring section 308 provided in a radio communication apparatus on receiving side according to the seventh embodiment of the present invention. In FIG.13, channel estimation section 701 obtains a channel estimation value using a pilot symbol. When Vehicular B propagation path is assumed herein, the channel estimation value obtained in channel estimation section 701 results from sampling on the transfer function shown in FIG.2 at intervals of subcarrier. Accordingly, IFFT section 702 performs IFFT processing on the channel estimation value, and thus obtains the impulse response of the propagation paths (FIG.14).

The impulse response obtained in IFFT section 702 is input to maximum delay time measuring section 703.

From the impulse response as shown in FIG.14, maximum delay time measuring section 703 measures maximum delay time τ max (in the example in FIG.14, τ max=20 [ µS ] ) where paths with a predetermined level or more (herein, the predetermined level is assumed to be -20[dB]) are distributed. Measured maximum delay time τ max on the propagation paths is subjected to the predetermined radio processing in transmission RF section 309 illustrated in FIG.4, and notified to the radio communication apparatus on transmitting side through duplexer 302 and antenna 301.

In the radio communication apparatus on transmitting side illustrated in FIG.3, maximum delay time τ max received through antenna 109 and duplexer 108 is subjected to the predetermined radio processing in reception RF section 110, and input to spreading factor determining section 104.

When a spreading code length in the frequency domain is greatly longer than τ max ⁻¹, the level variation in the spreading code length is not ignored, and orthogonality among spreading codes in the frequency domain deteriorates. Therefore, as maximum delay time τ max increases, spreading factor determining section 104 sets spreading factor M of a spreading code to be generated in first spreading code generating section 102 to higher. In other words, spreading factor determining section 104 sets spreading factor M in the frequency domain to higher, as the deterioration increases in orthogonality among spreading codes in the frequency domain, and thus suppresses the deterioration in orthogonality among spreading codes in the frequency domain. By thus increasing the spreading factor in the frequency domain, it is possible to suppress deterioration in the transmission performance. Spreading factor M in the frequency domain determined in spreading factor determining section 104 is output to first spreading code generating section 102, while being notified to the radio communication apparatus on receiving side as the spreading factor information.

Thus, according to the radio communication apparatus according to this embodiment, when propagation path conditions deteriorate and the maximum delay time on the propagation paths increases, the spreading factor is increased in the frequency domain and it is thus possible to suppress deterioration in orthogonality among spreading codes in the frequency domain. Further, according to this embodiment, it is possible to measure the maximum delay time used in setting a spreading factor, with accuracy and with a relatively simplified method.

### (Eighth embodiment)

A radio communication apparatus according to this embodiment is the same as that in the seventh embodiment in increasing the spreading factor in the frequency domain as the maximum delay time is longer on propagation paths, and differs from that in the seventh embodiment in measuring the maximum delay time on propagation paths from a minimum value of notch frequency interval of a channel estimation value.

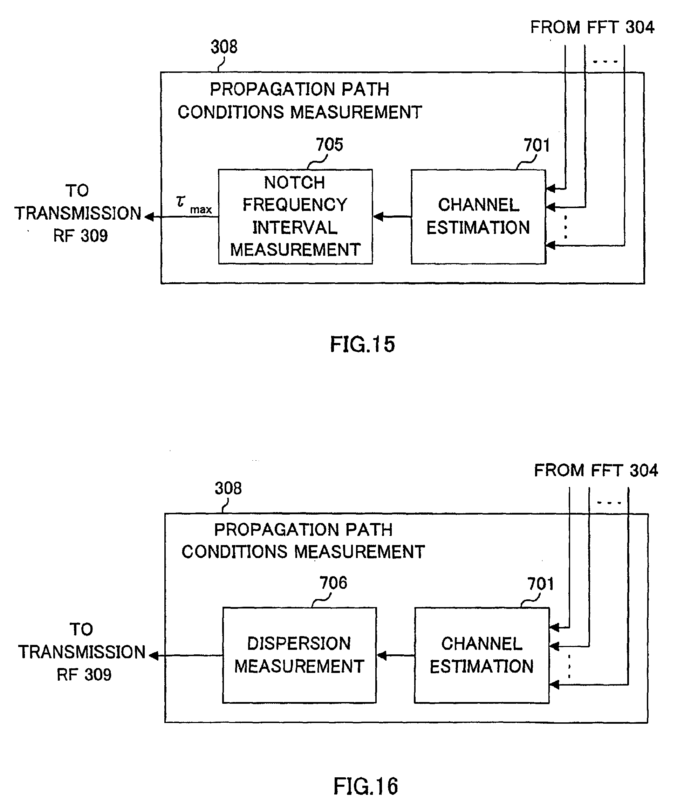

FIG.15 is a block diagram illustrating a configuration of propagation path conditions measuring section 308 provided in the radio communication apparatus on receiving side according to the eighth embodiment of the present invention. In addition, in FIG.15 the same structural components as in FIG.13 are assigned the same reference numerals to omit specific descriptions thereof.

As in the seventh embodiment, when Vehicular B propagation path is assumed herein, the channel estimation value obtained in channel estimation section 701 results from sampling on the transfer function shown in FIG.2 at intervals of subcarrier. Then, notch frequency interval measuring section 705 detects a minimum notch frequency interval of the channel estimation value, calculates the reciprocal of the detected minimum notch frequency interval and thereby measures maximum delay time τ max. Measured maximum delay time τ max is subjected to the predetermined radio processing in transmission RF section 309 illustrated in FIG.4, and notified to the radio communication apparatus on transmitting side through duplexer 302 and antenna 301. The operation of the radio communication apparatus on transmitting side is the same as in the seventh embodiment, and the descriptions are omitted.

In this way, the radio communication apparatus according to this embodiment has the same effects as in the seventh embodiment.

### (Ninth embodiment)

A radio communication apparatus according to this embodiment is the same as that in the seventh embodiment in increasing the spreading factor in the frequency domain as deterioration increases in orthogonality among spreading codes, and differs from that in the seventh embodiment in increasing the spreading factor in the frequency domain, as gain dispersion of channel estimation values in the frequency domain increases.

FIG.16 is a block diagram illustrating a configuration of propagation path conditions measuring section 308 provided in the radio communication apparatus on receiving side according to the ninth embodiment of the present invention. In addition, in FIG.16 the same structural components as in FIG.13 are assigned the same reference numerals to omit specific descriptions thereof.

As in the seventh embodiment, when Vehicular B propagation path is assumed herein, the channel estimation value obtained in channel estimation section 701 results from sampling on the transfer function shown in FIG.2 at intervals of subcarrier. Then, dispersion measuring section 706 measures gain dispersion of channel estimation values in the frequency domain. The measured gain dispersion value is subjected to the predetermined radio processing in transmission RF section 309 illustrated in FIG.4, and notified to the radio communication apparatus on transmitting side through duplexer 302 and antenna 301.

In the radio communication apparatus on transmitting side illustrated in FIG.3, the gain dispersion value received through antenna 109 and duplexer 108 is subjected to the predetermined radio processing in reception RF section 110, and input to spreading factor determining section 104.

As the deterioration increases in orthogonality among spreading codes in the frequency domain, the gain dispersion of channel estimation values increases in the frequency domain and transmission performance deteriorates. Therefore, as the gain dispersion increases, spreading factor determining section 104 sets spreading factor M of a spreading code to be generated in first spreading code generating section 102 to higher. In other words, spreading factor determining section 104 sets spreading factor M in the frequency domain to higher, as the deterioration increases in orthogonality among spreading codes in the frequency domain, and thus suppresses the deterioration in orthogonality among spreading codes in the frequency domain. By thus increasing the spreading factor in the frequency domain, it is possible to suppress deterioration in the transmission performance. Spreading factor M in the frequency domain determined in spreading factor determining section 104 is output to first spreading code generating section 102, while being notified to the radio communication apparatus on receiving side as the spreading factor information.

Thus, according to the radio communication apparatus according to this embodiment, when propagation path conditions deteriorate and the gain dispersion of channel estimation values increases in the frequency domain, the spreading factor is increased in the frequency domain and it is thus possible to suppress deterioration in orthogonality among spreading codes in the frequency domain. Further, according to this embodiment, it is possible to measure the gain dispersion of channel estimation values in the frequency domain used in setting a spreading factor, with accuracy and with a relatively simplified method.

In addition, the first to ninth embodiments are capable of being carried into practice in a combination thereof as appropriate. For example, in a combination of the first and second embodiments, it may be possible to vary spreading factors both in the frequency and time domains.

Further, it may be possible that a radio communication apparatus on receiving side is provided with the same section as spreading factor determining section 104 in the radio communication apparatus on transmitting, and determines a spreading factor, substituting for the radio communication apparatus on transmitting side, to notify to the radio communication apparatus on transmitting side. Determining a spreading factor in a radio communication apparatus on receiving side eliminates the need of determination in the radio communication apparatus on transmitting side, and thereby simplifies a configuration of the apparatus on transmitting side.

The present invention is suitable for use in a base station apparatus and communication terminal apparatus used in a mobile communication system.

As described above, according to the present invention, in radio communications based on the combination of a multicarrier modulation system and CDMA system, it is possible to suppress deterioration in transmission performance and decreases in system capacity due to deterioration in propagation path conditions.

This application is based on the Japanese Patent Application No.2001-232825 filed on July 31, 2001, entire content of which is expressly incorporated by reference herein.

## Claims

1. A radio communication apparatus that performs communications based on a combination of a multicarrier modulation system and a CDMA system, comprising:
a spreading section that performs spreading on symbols both in the frequency domain and in the time domain;
a generating section that assigns spread data on a chip basis to a respective one of subcarriers to generate a multicarrier signal; and
a transmitting section that transmits the generated multicarrier signal,
wherein the spreading section performs spreading in each of the frequency domain and the time domain with a spreading factor variable corresponding to propagation path conditions.

2. The radio communication apparatus according to claim 1, further comprising:
a determining section that determines a spreading factor in at least one of the frequency domain and the time domain corresponding to propagation path conditions.

3. The radio communication apparatus according to claim 1, wherein as deterioration increases in orthogonality among the subcarriers, the spreading factor in the at least one of the frequency domain and the time domain is increased.

4. The radio communication apparatus according to claim 1, wherein as an inter carrier interference level increases, the spreading factor in the frequency domain is increased.

5. The radio communication apparatus according to claim 1, wherein as an inter symbol interference level increases, the spreading factor in the time domain is increased.

6. The radio communication apparatus according to claim 1, wherein as deterioration increases in orthogonality among spreading codes, the spreading factor in the at least one of the frequency domain and the time domain is increased.

7. The radio communication apparatus according to claim 1, wherein as a maximum delay time on propagation paths increases, the spreading factor in the frequency domain is increased.

8. The radio communication apparatus according to claim 1, wherein as dispersion gain of channel estimation values in the frequency domain increases, the spreading factor in the frequency domain is increased.

9. The radio communication apparatus according to claim 1, wherein as a maximum Doppler frequency increases, the spreading factor in the time domain is increased.

10. A radio communication apparatus that performs communications based on a combination of a multicarrier modulation system and a CDMA system, comprising:
a receiving section that receives a multicarrier signal; and
a measuring section that measures propagation path conditions used in determining a spreading factor in at least one of the frequency domain and the time domain, from the received multicarrier signal.

11. The radio communication apparatus according to claim 10, further comprising:
a determining section that determines a spreading factor in at least one of the frequency domain and the time domain corresponding to propagation path conditions.

12. The radio communication apparatus according to claim 10, wherein the measuring section measures an inter carrier interference level from a received level of a subcarrier of specific frequency to which no data on a chip basis is always assigned in the time domain.

13. The radio communication apparatus according to claim 10, wherein the measuring section subtracts the inter carrier interference level from level variation in a pilot symbol inserted to a subcarrier subjected to fading distortion compensation, and thereby measures an inter symbol interference level.

14. The radio communication apparatus according to claim 10, wherein the measuring section subtracts the inter carrier interference level from a received level of a subcarrier to which data on a chip basis is not assigned, and thereby measures an inter symbol interference level.

15. The radio communication apparatus according to claim 10, wherein the measuring section measures a maximum Doppler frequency from a rate of level variation in a pilot symbol.

16. The radio communication apparatus according to claim 10, wherein when symbols are modulated in a modulation scheme that does not use amplitude information, the measuring section measures a maximum Doppler frequency from a rate of level variation in subcarriers with the same frequency.

17. The radio communication apparatus according to claim 10, wherein the measuring section measures a maximum Doppler frequency from a phase rotation rate of pilot symbol among subcarriers with the same frequency.

18. The radio communication apparatus according to claim 10, the measuring section measures a maximum delay time on propagation paths from impulse response of the propagation paths obtained by performing inverse Fourier transform on a channel estimation value.

19. The radio communication apparatus according to claim 10, the measuring section measures a maximum delay time on propagation paths from a minimum value of notch frequency interval of a channel estimation value.

20. The radio communication apparatus according to claim 10, wherein the measuring section measures gain dispersion of channel estimation values in the frequency domain.

21. A radio communication method for performing communications based on a combination of a multicarrier modulation system and a CDMA system, comprising:
a spreading step of performing spreading on symbols both in the frequency domain and in the time domain;
a generating step of assigning spread data on a chip basis to a respective one of subcarriers to generate a multicarrier signal; and
a transmitting step of transmitting the generated multicarrier signal,
wherein in the spreading step, spreading is performed in each of the frequency domain and the time domain, using a spreading factor variable corresponding to propagation path conditions.

22. A radio communication apparatus method for performing communications based on a combination of a multicarrier modulation system and a CDMA system, comprising:
a receiving step of receiving a multicarrier signal; and
a measuring step of measuring propagation path conditions used in determining a spreading factor in at least one of the frequency domain and the time domain, from the received multicarrier signal.
